# EUROPEAN PATENT SPECIFICATION

(11) **EP 0 778 490 B1**
(45) Date of publication and mention of the grant of the patent: **05.09.2001**
(21) Application number: 96119716.7
(22) Date of filing: 09.12.1996
(51) Int. Cl.: G03B 17/30, G03B 17/26, G03D 13/00

(54) **Method and apparatus for attaching or detaching a filmstrip to a film cartridge**
Verfahren und Vorrichtung zum Befestigen eines Filmstreifens an eine Filmpatrone oder zum Lösen des Streifens von der Patrone
Procédé et appareil pour attacher une pellicule photographique à une cartouche pour film ou pour l'en détacher

(30) Priority: 08.12.1995 JP 32069395
(43) Date of publication of application: 11.06.1997
(73) Proprietor: NORITSU KOKI CO., LTD., Wakayama-shi, Wakayama (JP)
(72) Inventor: Negoro, Hisashi, Wakayama-shi (JP); Yamamoto, Takuya, Wakayama-shi (JP)
(74) Representative: Müller-Boré & Partner Patentanwälte

(56) References cited:
- EP-A- 0 582 852
- EP-A- 0 660 163
- DE-A- 3 908 780

## Description

The present invention relates to a method and apparatus for attaching or detaching a filmstrip to a film cartridge.

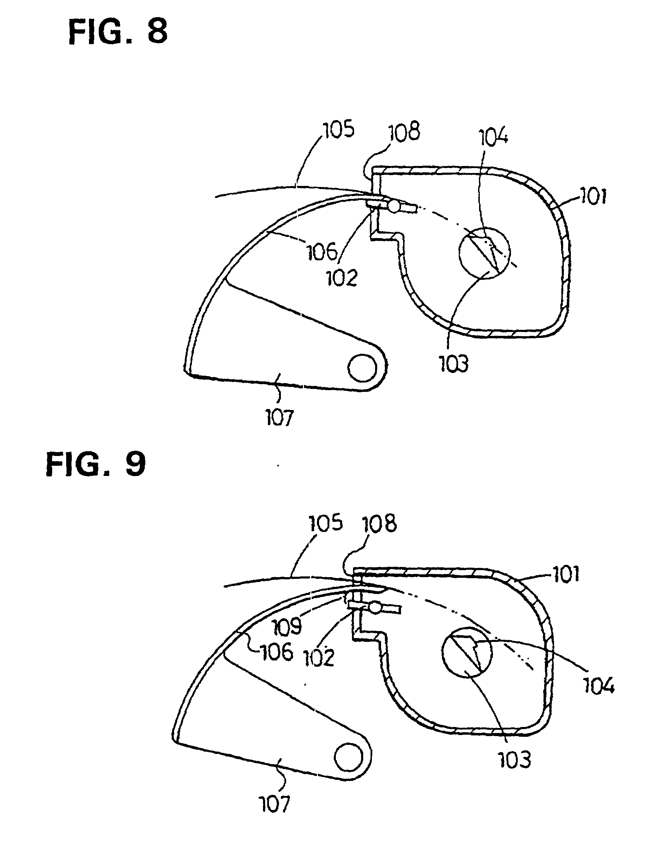

Heretofore, techniques for allowing a developed filmstrip to be wound automatically into a vacant film cartridge are known. As shown in Fig. 8, a film cartridge 101 is set at predetermined position in an automatic developing apparatus and a light valve/door 102 of said film cartridge 101 is opened by a drive tool (not shown) engaged. Then an attachment tool 107 having an arcuate blade 106 is rotated toward an opening/slot 108 through which a filmstrip goes in and out. At that time, said arcuate blade 106 engages the end of a filmstrip 105 and goes into the film cartridge 101 passing by the open light valve/door 102. Subsequently the end of said filmstrip 105 is guided and engaged with a pair of projections 104 formed on a spool 103 to catch a filmstrip.

In this case, said arcuate blade 106 is required to pass nearby the open light valve/door 102 in order to trace a curve (shown by a chain line) which show the movement of the filmstrip 105 until engagedwith the projections 104 on the spool 103. Therefore, the arcuate blade 106 may possibly touch the light valve/door 102 when the arcuate blade 106 pass by the open light valve/door102.

In order to solve the problem, U.S. Pat. No. 5,499,436 is proposed. As shown in Fig. 9, a technique for allowing the film cartridge 101 to be moved down from a position shown in Fig. 8 in order to provide sufficient clearance 109 between the arcuate blade 106 and the light valve/door 102 when the arcuate blade 106 pass by the open light valve/door102 is proposed in that patent. When the arcuate blade 106 is rotated in this condition, however, the filmstrip 105 engaged with the arcuate blade 106 cannot trace the curve (shown by a chain line in Fig. 9) which show the movement of the filmstrip 105 until engaged with the projections 104 on the spool 103. Therefore, just after the terminal end of the arcuate blade passed by the open light valve/door 102, the film cartridge 101 having moved down is moved up. Consequently, the filmstrip 105 engaged with the arcuate blade 106 may trace the curve (same trace line as the chain line shown in Fig. 8) so that the end of the filmstrip 105 can be engaged with the projections 104 formed on the spool 103 to catch the filmstrip.

However, the down-and-up movement of the film cartridge 101 mentioned above requires an intricate mechanism. Furthermore, when the drive tool (not shown) of the light valve/door 102 is moved together with the film cartridge 101 in engaged condition, the mechanism of the drive tool is required big modification. Alternatively, the film cartridge 101 may be moved up after disengaged from the drive tool, but the loss of time increases and a long operation time to wind numbers of filmstrips into same numbers of film cartridges is required resulting in low productivity. Furthermore, when plural film cartridges are arranged in a film cartridge holder and the filmstrip is wound into one of the film cartridges, a positioning mechanism for the film cartridge holder is required and an overall device becomes bigger.

The problem mentioned above is a big barrier against a demand of miniaturizing an overall device for merchandising.
It is the object of the present invention to provide an insertion mechanism of arcuate blade of an automatic developing apparatus and a corresponding method of attaching a filmstrip to a film cartrige which enable a smooth winding of a filmstrip into a film cartrige without moving a film cartrige up and down and enable a smooth winding of a filmstrip into a fim cartrige arranged in a film cartrige holder with a plurality of other film cartriges.

This object is achieved by a mechanism having the features defined in claim 1 and a method having the features defined in claim 10. Preferred embodiments are defined in the dependent subclaims.

Preferably said attachment tool comprises a mounting section having a hole provided in the lower end, and an arcuate blade having a terminal end.

According to a preferred embodiment said means for moving said attachment tool in a radial direction comprises said hole and a drive shaft rotating said mounting section so that relative displacement of said mounting section and said drive shaft in said hole is permitted.

Said hole has preferably a rectangular configuration.

Preferably, the mechanism further comprises shifting means for contacting said mounting section and shifting said mounting section to a radially outward direction.

According to a preferred embodiment the mechanism further comprises biasing means for biasing said mounting section to a radially inward direction, the biasing means in particular being provided in said hole.

Said shifting means are preferably fixed below said drive shaft, wherein it is in particular preferred that said shifting means is provided by an elongated hole, through which extends a support pin, which extends through a hole in said drive shaft, wherein said biasing means is provided as a spring around said support pin.

The mechanism further comprises preferably a film cartridge storage means for storing a plurality of film cartridges and transportation thereof.

Finally, it is preferred that the mechanism further comprises a transporting means for transporting said film cartridge storage means in a predetermined distance sequentially for positioning said film cartridge in a predetermined position.

Further features and advantages will become apparent from the following description of preferred embodiments, which shall not be regarded as restrictive and which refer to the attached drawings.
- Fig. 1: is a simplified drawing of an automatic developing apparatus of the present invention;
- Fig. 2: is a perspective view of a film cartridge;
- Fig. 3: is a side view of a film cartridge holder;
- Fig. 4: is a simplified drawing of an arcuate blade intrusion system of the present invention;
- Fig. 5: is a simplified drawing of an arcuate blade intrusion system of the present invention in operation;
- Fig. 6: is a schematic view illustrating a trace line of an arcuate blade when intruded into a film cartridge;
- Fig. 7: is a perspective view illustrating the engaging relation between a developed filmstrip and an arcuate blade;
- Fig. 8: is a simplified schematic drawing of a conventional arcuate blade intrusion system;
- Fig. 9: is a simplified schematic drawing of a conventional arcuate blade intrusion system in operation.
- Fig. 10: is an arrangement plane of the main components of the arcuate blade intrusion system;
- Fig. 11: is a another embodiment of a trace line of an arcuate blade when intruded into a film cartridge;
- Fig. 12: is a another embodiment of an arcuate blade intrusion system.

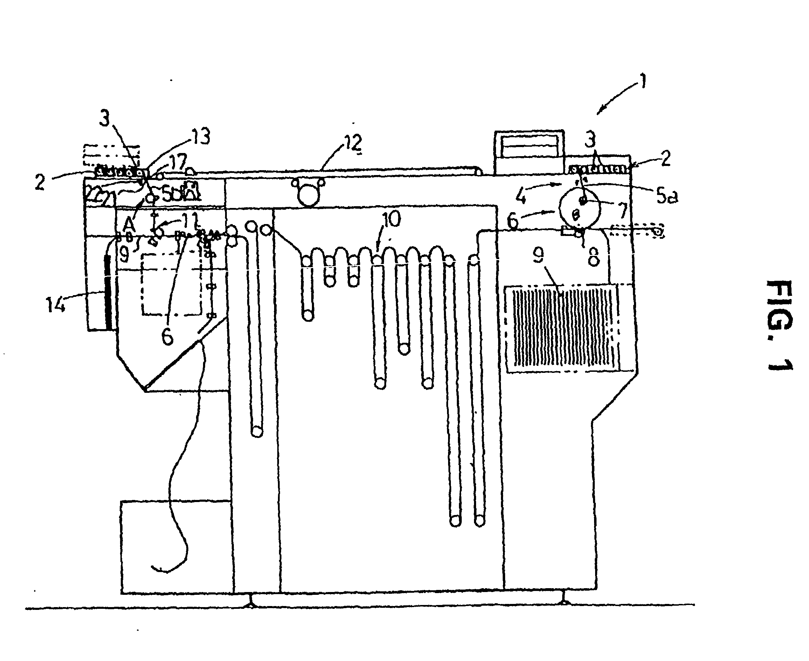

Preferred embodiment of the arcuate blade intrusion system of the present invention will be described with reference to the drawings, Fig. 1 to Fig. 7. Fig. 1 is a simplified drawing of an automatic developing apparatus 1 equipped with an arcuate blade intrusion system A of the present invention and the reference numeral 2 is a film cartridge holder in which plural film cartridges 3 are arranged with undeveloped filmstrips wound in them respectively. An undeveloped filmstrip 5a is drawn out of a film cartridge 3 in the film cartridge holder 2 at a drawing out portion 4. An undeveloped filmstrip 5a drawn out of the film cartridge 3 is rewound into a rewinding film cartridge 7 at a rewinding portion 6.

The end of the undeveloped filmstrip 5a is engaged and connected to a short leader 9 for filmstrip conveyance at a splice portion 8. The undeveloped filmstrip 5a engaged with the short leader 9 is developed at a developing portion 10. The developed filmstrip 5b is disengaged from short leader 9 at a disengagement portion 11. The vacant film cartridge 3 from which the undeveloped filmstrip 5a was drawn out at the drawing out portion 4 is conveyed through a vacant film cartridge conveyor portion 12. The film cartridge holder 2 is held temporarily at a filmstrip winding portion 13 in order to wind the developed filmstrip 5b into the conveyed vacant film cartridge 3. A leader storage portion 14 is provided in order to store plural short leaders 9 disengaged from developed filmstrip 5b at the disengagement portion 11. Under said filmstrip winding portion 13, said arcuate blade intrusion system A is provided.

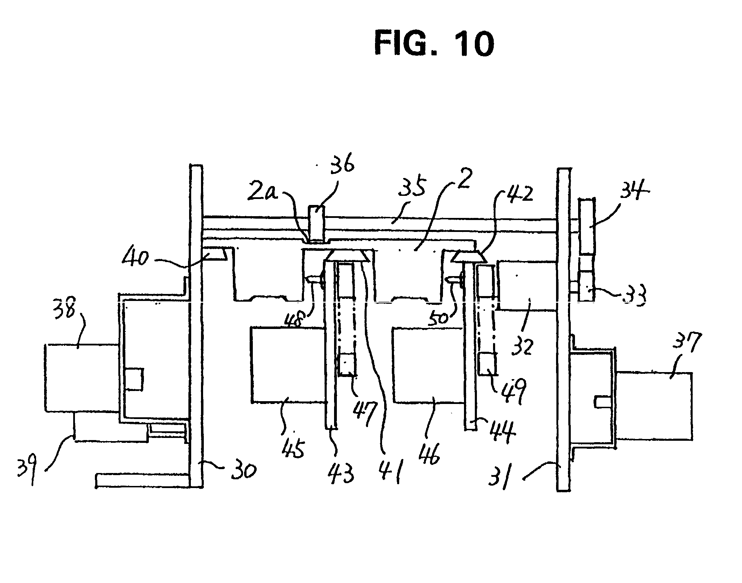

Fig. 10 is an arrangement plan of the main components of the arcuate blade intrusion system A including a conveyor device of a film cartridge holder 2.

On frame members 30 and 31, a conveyor motor 32 is installed to convey the film cartridge case 2. A drive pulley 33 which drives a driven pulley 34 fixed at the end of drive shaft 35 through a drive belt is fixed at the end of an output shaft of said conveyor motor 32. Said drive shaft 35 is equipped with a pinion 36 which engages with a rack 2a formed on a top surface of said film cartridge case 2 along its length. The film cartridge case 2 is driven and conveyed to the direction perpendicular to the paper by the rotation of said pinion 36. Guide members 40, 41, 42 on which the film cartridge case 2 is mounted are installed under the bottom surface of said film cartridge case 2.

A drive motor 38 to rotate the light valve/door 18 and a drive motor 39 to drive the drive shaft 24 of the attachment arm 22 are installed on the frame 30. Both of said drive motors are not shown.

Frame members 43 and 44 are installed below the film cartridge case 2. Said frame members 43 and 44 are equipped with drive shafts 48 and 50 to drive spool shafts 16 of the film cartridges 3 and spool drive motors 45 and 46 with pulleys 47 and 49 to drive said drive shafts 48 and 50 through drive belts.

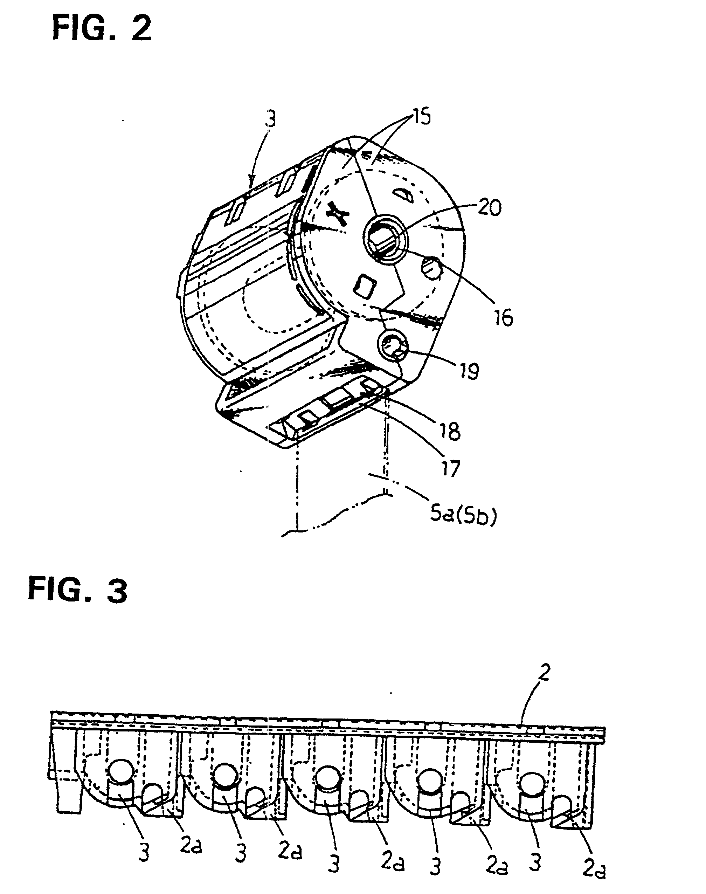

As shown in Fig. 2, the film cartridge 3 mounts a spool 16 rotatably on a shell 15 which consists of two resin shell halves and a light valve/door 18 for light shielding is installed in front of an opening/slot 17 on a outer wall of the shell 15 as ingress and egress of the filmstrip. The light valve/door 18 is operated between open and closed positions through a support shaft (operating portion) 19 controlled by an exclusive drive motor (not shown). When the light valve/door is operated to open position, a shaft end (operating portion) 20 of the spool 16 located on a side wall of the shell 15 is rotated by a drive tool (not shown) to allow the filmstrip 5 to be released out of or wound into the film cartridge 3.

As shown in Fig. 3, film cartridges 3 are arranged in the film cartridge holder 2 in two lines having five film cartridges in each line (half of them, not shown). An opening 2a is provided under each film cartridge held in the film cartridge holder 2 respectively. Through 2a, the undeveloped filmstrip goes out of and the developed filmstrip is wound into the film cartridge.

As described above, when the film cartridge holder 3 with vacant film cartridges comes to the filmstrip winding portion 13, the developed filmstrips 5b are wound into vacant film cartridges 3 positioned above successively.

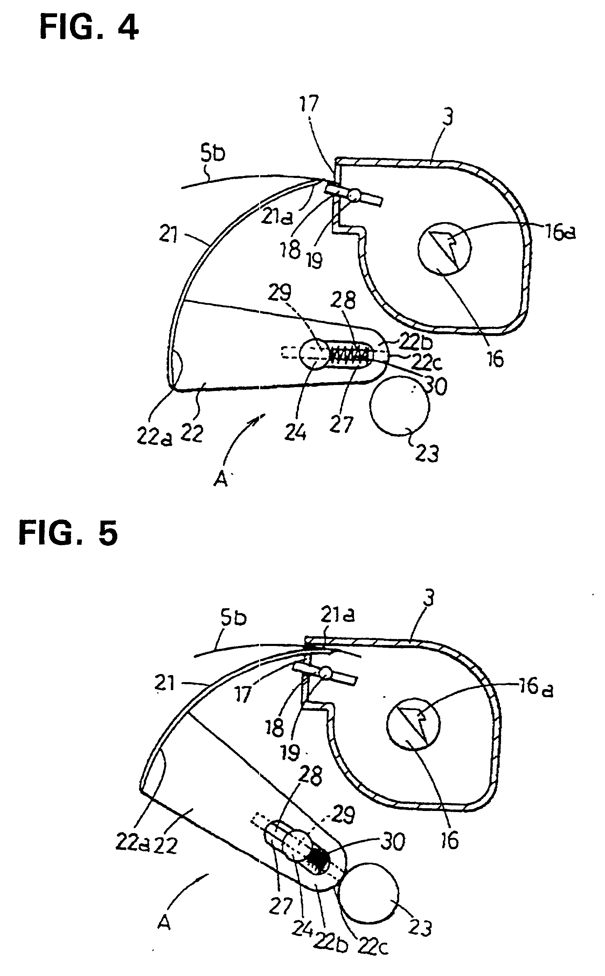

As shown in Fig.4 to Fig. 7, the arcuate blade intrusion system A comprises an attachment arm 22 having an arcuate blade 21 on its end surface 22a; a contact pin 23 which said attachment arm 22 contacts during rotation; a drive shaft 24 on which said attachment arm 22 rotates; and a drive device (not shown) of said drive shaft 24.

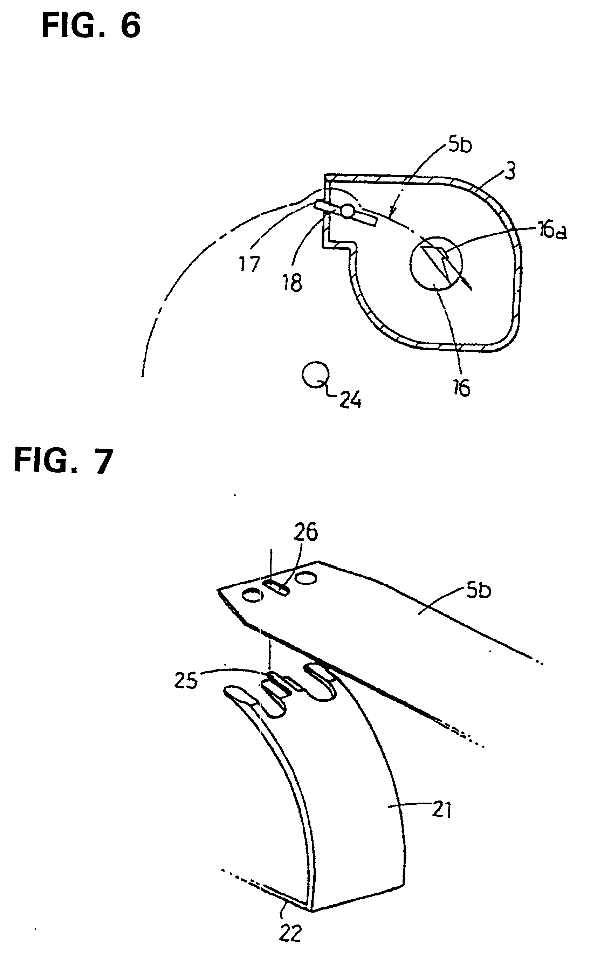

As shown in Fig. 7, the arcuate blade 21 is made of thin metal formed to be arcuate and have a retaining finger 25 on its terminal end. Said retaining finger 25 engages a drive opening 26 provided on the end of the developed filmstrip 5b. An arcuate blade 21 may be made of other materials than metal if there is no strength problem.

As shown in Fig. 4, the end portion of the arcuate blade 21 mates with the end surface 22a of the attachment arm 22 formed to be arcuate. An outer surface 22c of a pivot end portion 22b of said attachment arm 22 is formed semicircular. An oval hole 27 is formed on said pivot end portion 22b. A support pin 28 is set on a side surface of the attachment arm 22 across said oval hole 27. Both ends of said support pin 28 are fixed on the attachment arm 22.

In the assembled condition, the support pin 28 penetrates said drive shaft 24 through a hole 29 formed on it. The attachment arm 22 can move to its length direction relative to the drive shaft 24 and rotate around said drive shaft 24 also. Furthermore, the support pin 28 is equipped with a spring 30 which pushes continuously drive shaft 24 toward the arcuate blade 21 direction in the oval hole 27.

Under the filmstrip winding portion 13 (see Fig. 1), the contact pin 23 is provided. When the attachment arm 22 is rotated by the drive shaft 24 of the attachment arm 22, the outer surface 22c of the pivot end portion 22b of the attachment arm 22 contacts the contact pin 23. Subsequently, the attachment arm 22 is moved toward the arcuate blade 21 direction opposing the spring force of said spring 30.

The attachment arm 22 rotates toward the film cartridge 3 contacting the contact pin 23, so that a terminal end 21a of the arcuate blade 21 can pass by the open light valve/door 18 of the opening/slot 17 following the trace line which allows the arcuate blade 21 not to contact with the light valve/door 18.

As shown in Fig. 3, when the film cartridge holder 2 with plural vacant film cartridges 3 arranged herein is set in the filmstrip winding portion 13 (see Fig. 1) the opening/slot 17 of each film cartridge 3 arranged in the film cartridge holder 2 faces downward. The film cartridge 3 in the first position of the film cartridge holder 2 is placed above the arcuate blade 21 of the arcuate blade intrusion system A which guides the developed filmstrip 5b into the film cartridge 3.

Under this condition, the light valve/door 18 which covers the opening/ slot 17 is opened by the drive tool (not shown). At the same time, the attachment arm 22 is rotated by the drive shaft 24 driven by the drive device (not shown) toward the film cartridge 3. As the attachment arm 22 rotates, the outer surface 22c of the pivot end portion 22b of the attachment arm 22 rotates contacting the contact pin 23.

As previously described, the attachment arm 22 is moved outer in radius direction opposing spring force of the spring 30. This movement of the attachment arm 22 occurs when the terminal end 21a of the arcuate blade 21 pass by the opening/slot 17.

When the terminal end 21a of the arcuate blade 21 passes by the light valve/door 18, the attachment arm 22 is moved outer in radius direction by the contact pin 23, so that the arcuate blade 21 can pass by the opening/ slot 17 smoothly prevented from touching the light valve/door 18. Then the arcuate blade 21 moves on the original arcuate trace line and guides the engaged developed filmstrip 5b to a pair of projections 16a formed on a spool 16 to catch a filmstrip so as the trailing end of the developed filmstrip 5b to be set on the projections 16a.

The reason why the arcuate blade 21 moves on the original trace line, same curve as drawn prior to be inserted into the film cartridge, after having passed by the open light valve/door 18, as mentioned above, is as follows. A contacting condition of the outer surface 22c of the pivot end portion 22b of the attachment arm 22 with the contact pin 23 is released (as shown in Fig. 4), and consequently the attachment arm 21 is restored to its original position by the spring force of the spring 30.

The developed filmstrip 5b set on the projection 16a on the spool 16 of the film cartridge 3 is wound around the spool 16 driven by drive motor (not shown) connected to the spool 16. As described previously, prior to the winding motion of the developed filmstrip 5b, the arcuate blade 21 inserted into the film cartridge 3 is taken out of the film cartridge 3 and returned to the original position by the reverse rotation of the attachment arm 22 driven by the drive shaft 24. In the reverse rotation, the attachment arm 22 contacts again the contact pin 23 and consequently moves on the trace line which prevents from touching the light valve/door 18 while passing by the light valve/door 18.

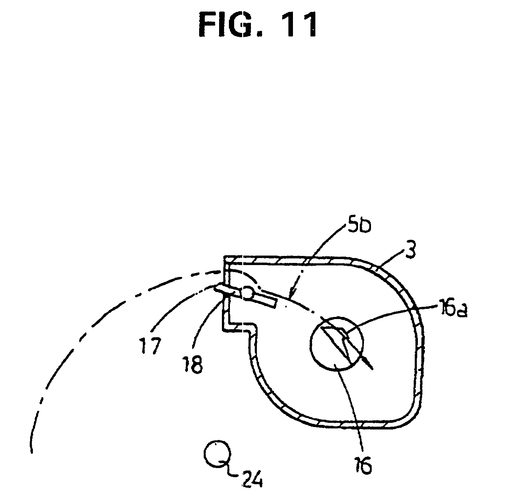

Fig. 11 shows another embodiment of the trace line of the terminal end 21a of the arcuate blade 21. In this embodiment, said terminal end 21a of the arcuate blade 21 is rotated toward the film cartridge 3 with a radially pushed out position when it is out of the light valve/door 18, that is, out of the cartridge 3, while, in Fig. 6, the terminal end 21a of the arcuate blade 21 traces the curve deformed outside near by the light valve/door 18.

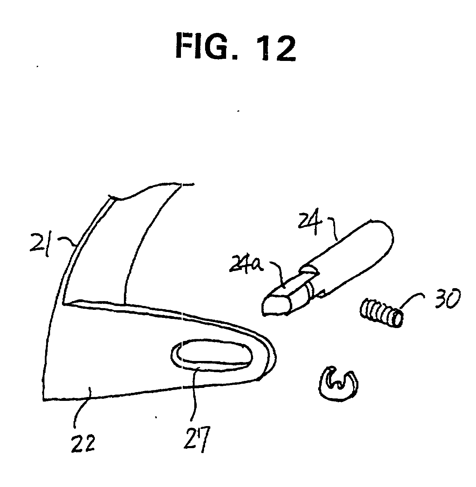

Fig. 12 shows another embodiment of the arcuate blade intrusion system A. A pair of opposite flat portions 24a is formed at the end of the drive shaft 24 and a drive torque is transmitted through said flat portion 24a. The drive shaft is connected to the attachment arm 22 by a snap ring so as not to be disconnected. A spring 30 is installed between the drive shaft 24 and the oval hole 27 appropriately.

Due to the action of the arcuate blade intrusion system A, as described above, the undeveloped filmstrip 5a (see Fig. 1) is drawn out of the film cartridge 3, engaged to the short leader 9, conveyed, and then developed at a developing portion 10. After developed the short leader 9 is disengaged from the developed filmstrip 5b. The film cartridge holder 2 in which the original vacant film cartridges is arranged is conveyed through the vacant film cartridge conveyor portion 12 and placed in the filmstrip winding portion 13 located above the arcuate blade intrusion system A. Each developed filmstrip 5b is wound and stored into corresponding original vacant film cartridge 3 respectively by said arcuate blade intrusion system A. Once the first filmstrip is stored into the first film cartridge 3, the film cartridge holder 2 is moved a step and the second developed filmstrip 5b is stored into the next film cartridge 3. When all the film cartridge 3 in the film cartridge holder 2 are filled with developed filmstrips 5b, said film cartridge holder 2 is conveyed to the next printing stage.

Although the arcuate blade intrusion system A mentioned above is installed in the attacher which works to store the developed filmstrip 5b into the film cartridge 3, it can be installed as well in the detacher which works to disengage the undeveloped filmstrip 5a.

Thus there is provided an attachment/detachment apparatus and method which is simple in construction and allows the filmstrip to go through the opening/slot of the film cartridge moving on the trace line which prevents from touching the open light valve/door, and enables smooth storing operation of the developed filmstrip into the film cartridge without loss of operational efficiency.

## Claims

1. A mechanism for attaching a filmstrip (5a, 5b) to a film cartridge (3, 7) having a take-up spool (16) rotatably mounted therein, said cartridge (3, 7) having an access opening (17) for allowing film to be inserted or removed from within the cartridge (3, 7) comprising:
a. means (2, 2a, 30-40, 12) for positioning the film cartridge (3, 7) in a predetermined position;
b. an attachment tool (A) rotatably mounted to said mechanism for movement about a pivot axis, said attachment tool (A) having a generally arcuate guide member (21);
c. means (24) for moving said attachment tool (A) from a non-engaged position to a first engaged position such that a portion of the attachment tool (A) extending into said access opening (17);
d. means (25) for engaging the filmstrip (5a, 5b) to said attachment tool (A);
e. means (24) for moving said tool (A) to a second engaging position for engaging the filmstrip (5a, 5b) to said spool (16);
characterized by
f. means (27, 28, 29, 30) for simultaneously moving said attachment tool (A) in a direction radial to the pivot axis while said attachment tool (A) is inserted into said access opening (17).

2. A mechanism according to claim 1 wherein said attachment tool (A) comprising a mounting section (22) having a hole (27) provided in the lower end, and a arcuate blade having a terminal end (21a).

3. A mechanism according to claim 2 wherein said means (27, 28, 29, 30) for moving said attachment tool (A) in a radial direction comprises said hole (27) and a drive shaft (24) rotating said mounting section (22) so that relative displacement of said mounting section (22) and said drive shaft (24) in said hole (27) is permitted.

4. A mechanism according to claim 3 further comprising shifting means (27, 28, 29, 30) for contacting said mounting section (22) and shifting said mounting section (22) to a radially outward direction.

5. A mechanism according to claim 3 or 4, wherein said hole (27) has a rectangular configuration.

6. A mechanism according to anyone of claims 3 to 5, further comprising biasing means (30) for biasing said mounting section (22) to a radially inward direction.

7. A mechanism according to anyone of claims 4 to 6, wherein said shifting means (27, 28, 29, 30) are fixed below said drive shaft (24).

8. A mechanism according to anyone of claims 1 to 7, further comprising a film cartridge storage means (2) for storing plurality of film cartridges (3) and transporting thereof.

9. A mechanism according to claim 8 further comprising a transporting means (30-49) for transporting said film cartridge storage means (2) in a predetermined distance sequentially for positioning said film cartridge (3) in a predetermined position.

10. A method of attaching a filmstrip (5a, 5b) to a film cartridge (3, 7) comprising the step of;
a. providing a cartridge (3, 7) having a take-up spool (16) rotatably mounted wherein, said cartridge (3, 7) having an access opening (17) for allowing insertion and removal of the filmstrip (5a, 5b) into said cartridge and engagement with said spool (16);
b. positioning said cartridge (3) in a predetermined position by first means (2, 24, 30-49) for positioning the cartridge (3, 7);
c. engaging the filmstrip (5a, 5b) to an attachment tool (A);
d. moving said attachment tool (A) from a non-engaged position to a first position adjacent to said access opening (17);
e. moving said attachment tool (A) about a pivot axis from the first position adjacent to said access opening (17) to the second position inside of said cartridge (3, 7) and adjacent to the access opening (17) while said attachment tool (A) is simultaneously moved in a direction radial outward to the pivot axis;
f. moving said attachment tool (A) about the pivot axis from the second position to an engaging position while said attachment tool (A) is simoultaneously moved in a direction radial inward to the pivot axis; and
g. engaging the film strip (5a, 5b) to said spool (16).

## Patentansprüche

1. Mechanismus zum Befestigen eines Filmstreifens (5a, 5b) an einer Filmpatrone (3, 7), die eine darin drehbar montierte Aufnahmespule (16) aufweist, welche Patrone (3, 7) eine Zutrittsöffnung (17) aufweist, um zu ermöglichen, daß der Film in die Patrone (3, 7) eingeführt oder aus dieser entfernt wird, umfassend:
a. Mittel bzw. Einrichtungen (2, 2a, 30 - 40, 12) zum Positionieren der Filmpatrone (3, 7) in einer vorbestimmten Position;
b. ein Festlegungs- bzw. Befestigungswerkzeug (A), das drehbar an diesem Mechanismus zur Bewegung um eine Schwenk- bzw. Drehachse montiert ist, welches Festlegungswerkzeug (A) ein allgemein gekrümmtes Führungsglied (21) aufweist;
c. Mittel (24) zum Bewegen des Festlegungswerkzeugs (A) von einer Nichteingriffsposition in eine erste Eingriffsposition derart, daß ein Bereich des Festlegungswerkzeugs (A) sich in die Zutrittsöffnung (17) erstreckt;
d. Mittel (25) zum Festlegen bzw. Eingreifen des Filmstreifens (5a, 5b) an dem Festlegungswerkzeug (A);
e. Mittel (24) zum Bewegen des Werkzeugs (A) in eine zweite Eingriffsposition zum Festlegen bzw. Eingreifen des Filmstreifens (5a, 5b) an der Spule (16); gekennzeichnet durch
f. Mittel (27, 28, 29, 30) zum gleichzeitigen Bewegen des Festlegungswerkzeugs (A) in einer Richtung radial zu der Schwenk- bzw. Drehachse, während das Festlegungswerkzeug (A) in die Zutrittsöffnung (17) eingesetzt ist.

2. Mechanismus nach Anspruch 1, worin das Festlegungswerkzeug (A) einen Montageabschnitt (22) mit einem in dem unteren Ende vorgesehenen Loch (27) und eine gekrümmte Klinge bzw. Schneide umfaßt, die ein Anschlußende (21a) aufweist.

3. Mechanismus nach Anspruch 2, worin die Mittel (27, 28, 29, 30) zum Bewegen des Festlegungswerkzeugs (A) in einer radialen Richtung das Loch (27) und eine Antriebswelle (24) umfassen, die den Montageabschnitt (22) dreht, so daß eine relative Verlagerung des Montageabschnitts (22) und der Antriebswelle (24) in dem Loch (27) ermöglicht ist.

4. Mechanismus nach Anspruch 3, weiters umfassend Verschiebungsmittel (27, 28, 29, 30) zum Kontaktieren des Montageabschnitts (22) und Verschieben des Montageabschnitts (22) in eine radial nach außen gerichtete Richtung.

5. Mechanismus nach Anspruch 3 oder 4, worin das Loch (27) eine rechteckige Konfiguration aufweist.

6. Mechanismus nach einem der Ansprüche 3 bis 5, weiters umfassend Vorspannmittel (30) zum Vorspannen bzw. Beaufschlagen des Montageabschnitts (22) in eine radial nach innen gerichtete Richtung.

7. Mechanismus nach einem der Ansprüche 4 bis 6, worin die Verschiebemittel (27, 28, 29, 30) unter der Antriebswelle (24) festgelegt sind.

8. Mechanismus nach einem der Ansprüche 1 bis 7, weiters umfassend Filmpatronen-Lagermittel (2) zum Lagem einer Mehrzahl von Filmpatronen (3) und Transportieren derselben.

9. Mechanismus nach Anspruch 8, weiters umfassend Transportmittel (30 - 49) zum Transportieren der Filmpatronen-Lagermittel (2) in einem vorbestimmten Abstand sequentiell zum Positionieren der Filmpatrone (3) in einer vorbestimmten Position.

10. Verfahren zum Festlegen eines Filmstreifens (5a, 5b) an einer Filmpatrone (3, 7), umfassend den Schritt:
a. Bereitstellen einer Patrone (3, 7), die eine darin rotierbar montierte Aufnahmespule (16) aufweist, welche Patrone (3, 7) eine Zutrittsöffnung (17) zum Ermöglichen eines Einsetzens und Entfernens des Filmstreifens (5a, 5b) in bzw. von der Patrone und in Eingriff Bringen mit der Spule (16) aufweist;
b. Positionieren der Patrone (3) in einer vorbestimmten Position durch erste Mittel (2, 24, 30 - 49) zum Positionieren der Patrone (3, 7);
c. Festlegen bzw. in Eingriff Bringen des Filmstreifens (5a, 5b) an einem Festlegungswerkzeug (A);
d. Bewegen des Festlegungswerkzeugs (A) von einer Nichteingriffsposition in eine erste Position benachbart der Zutrittsöffnung (17);
e. Bewegen des Festlegungswerkzeugs (A) um eine Schwenk- bzw. Drehachse von der ersten Position benachbart der Zutrittsöffnung (17) zu der zweiten Position innerhalb der Patrone (3, 7) und benachbart der Zutrittsöffnung (17), während das Festlegungswerkzeug (A) gleichzeitig in einer Richtung radial nach außen zu der Schwenk- bzw. Drehachse bewegt wird;
f. Bewegen des Festlegungswerkzeugs (A) um die Schwenkachse von der zweiten Position zu einer Eingriffsposition, während das Festlegungswerkzeug (A) gleichzeitig in einer Richtung radial nach innen zu der Schwenk- bzw. Drehachse bewegt wird; und
g. Festlegen bzw. in Eingriff Bringen des Filmstreifens (5a, 5b) an der Spule (16).

## Revendications

1. Mécanisme pour fixer une bande de film (5a, 5b) à une cartouche de film (3, 7) comportant une bobine réceptrice (16) montée en rotation en son sein, ladite cartouche (3, 7) comportant une ouverture d'accès (17) pour permettre au film d'être inséré dans, ou enlevé de, la cartouche (3, 7) comprenant :
a. un moyen (2, 2a, 30-40, 12) pour placer la cartouche de film (3, 7) dans une position prédéterminée ;
b. un outil de fixation (A) monté en rotation sur ledit mécanisme pour mouvement autour d'un axe de pivotement, ledit outil de fixation (A) comportant un élément de guidage généralement arqué (21) ;
c. un moyen (24) pour déplacer ledit outil de fixation (A) d'une position non engagée à une première position engagée de manière qu'une partie de l'outil de fixation (A) s'étende dans ladite ouverture d'accès (17) ;
d. un moyen (25) pour engager la bande de film (5a, 5b) sur ledit outil de fixation (A) ;
e. un moyen (24) pour déplacer ledit outil (A) jusqu'à une deuxième position d'engagement pour engager la bande de film (5a, 5b) sur ladite bobine (16) ;
caractérisé par
f. un moyen (27, 28, 29, 30) pour déplacer simultanément ledit outil de fixation (A) dans une direction radiale relativement à l'axe de pivotement tandis que ledit outil de fixation (A) est inséré dans ladite ouverture d'accès (17).

2. Mécanisme selon la revendication 1, dans lequel ledit outil de fixation (A) comprend une section de montage (22) comportant un orifice (27) ménagé dans l'extrémité inférieure, et une lame arquée comportant une extrémité terminale (21a).

3. Mécanisme selon la revendication 2, dans lequel ledit moyen (27, 28, 29, 30) pour déplacer ledit outil de fixation (A) dans une direction radiale comprend ledit orifice (27) et un àrbre d'entraînement (24) faisant tourner ladite section de montage (22) de manière qu'un déplacement relatif de ladite section de montage (22) et dudit arbre d'entraînement (24) dans ledit orifice (27) soit permis.

4. Mécanisme selon la revendication 3, comprenant également un moyen de déplacement (27, 28, 29, 30) pour contacter ladite section de montage (22) et déplacer ladite section de montage (22) dans une direction radialement vers l'extérieur.

5. Mécanisme selon la revendication 3 ou 4, dans lequel ledit orifice (27) a une configuration rectangulaire.

6. Mécanisme selon l'une quelconque des revendications 3 à 5, comprenant également un moyen de sollicitation (30) pour solliciter ladite section de montage (22) dans une direction radialement vers l'intérieur.

7. Mécanisme selon l'une quelconque des revendications 4 à 6, dans lequel ledit moyen de déplacement (27, 28, 29, 30) est fixe sous ledit arbre d'entraînement (24).

8. Mécanisme selon l'une quelconque des revendications 1 à 7, comprenant également un moyen de stockage de cartouche de film (2) pour stocker une pluralité de cartouches de film (3) et transporter celles-ci.

9. Mécanisme selon la revendication 8 comprenant également un moyen de transport (30-49) pour transporter ledit moyen de stockage de cartouche de film (2) sur une distance prédéterminée séquentiellement afin de placer ladite cartouche de film (3) dans une position prédéterminée.

10. Procédé de fixation d'une bande de film (5a, 5b) à une cartouche de film (3, 7) comprenant la phase consistant à :
a. prévoir une cartouche (3, 7) comportant une bobine réceptrice (16) montée en rotation en son sein, ladite cartouche (3, 7) comportant une ouverture d'accès (17) pour permettre à la bande de film (5a, 5b) d'être insérée dans, et enlevée de, ladite cartouche et d'être engagée avec ladite bobine (16) ;
b. placer ladite cartouche (3) dans une position prédéterminée par un premier moyen (2, 24, 30-49) afin de positionner la cartouche (3, 7) ;
c. engager la bande de film (5a, 5b) sur un outil de fixation (A) ;
d. déplacer ledit outil de fixation (A) d'une position non engagée à une première position adjacente à ladite ouverture d'accès (17) ;
e. déplacer ledit outil de fixation (A) autour d'un axe de pivotement de la première position adjacente à ladite ouverture d'accès (17) à la deuxième position à l'intérieur de ladite cartouche (3, 7) et adjacente à l'ouverture d'accès (17) tandis que ledit outil de fixation (A) est simultanément déplacé dans une direction radialement vers l'extérieur relativement à l'axe de pivotement ;
f. déplacer ledit outil de fixation (A) autour de l'axe de pivotement de la deuxième position à une position d'engagement tandis que ledit outil de fixation (A) est simultanément déplacé dans une direction radialement vers l'intérieur relativement à l'axe de pivotement ; et
g. engager la bande de film (5a, 5b) sur ladite bobine (16).
